# EUROPEAN PATENT APPLICATION

(11) **EP 3 696 876 A1**
(43) Date of publication of application: **19.08.2020**
(21) Application number: 19157671.9
(22) Date of filing: 18.02.2019
(51) Int. Cl.: H01M 2/10, H01M 10/625, H01M 10/6567, H01M 10/6554, H01M 10/613

(54) **BATTERY MODULE**

(71) Applicant: 3M Innovative Properties Company, Saint Paul, MN 55133-3427 (US)
(72) Inventor: Stuetz, Harald, 8020 Graz (AT); Brunnsteiner, Bernhard, 8020 Graz (AT); del Negro, Peter, 8020 Graz (AT); Suzzi, Daniele, 8020 Graz (AT); Aksamija, Enes, 8020 Graz (AT); Traussnig, Thomas, 8020 Graz (AT); Obersteiner, Veronika, 8020 Graz (AT)
(74) Representative: Mössner, Brigitte

(57) **Abstract**

Battery module for a propulsion battery system of an electrical vehicle, comprising a plurality of battery cells, arranged in a cooling volume for containing a cooling fluid for cooling the battery cells, and a plurality of wall elements defining the cooling volume.

One of the wall elements (33) comprises an inner surface (110), oriented towards one of the battery cells, for contacting the cooling fluid, and an outer surface forming an exterior surface of the battery module.

The inner surface is shaped to define a plurality of grooves (130) or a plurality of ridges for increasing the contact surface between the wall element and the cooling fluid, and for directing the flow of the cooling fluid in the cooling volume.

## Description

The present disclosure relates to fluid-cooled battery systems for electric vehicles such as electric cars, and in particular to fluid-cooled battery modules for such battery systems, to battery systems comprising such modules, and to electrical or hybrid-electrical vehicles comprising such battery systems or such battery modules.

In rechargeable propulsion battery systems for electric vehicles, a number of individual battery cells are assembled to form a battery module, and several battery modules are electrically connected to form a battery pack. Propulsion battery systems of electric vehicles typically comprise one or a few battery packs.

A battery cell is an electro-chemical battery cell, i.e. the smallest electrical unit in a battery system to chemically store electrical energy. Generally, battery cells should be operated within a certain temperature interval, e.g. 20°C to 60°C, for highest efficiency and longest lifetime. However, battery cells generate considerable heat when being quickly charged or quickly discharged, e.g. when much energy is required to accelerate the vehicle quickly. To keep the battery cells in their optimum temperature interval, this heat must be removed from the battery cells within short time. Fluid cooling is a preferred method of cooling battery cells, in which a cooling fluid (a cooling liquid or a cooling gas) contacts a portion of the outer surface of the battery cell, absorbs heat from this surface and heats up, flows to a cooling element, cools down and flows back to a battery cell to again absorb heat, and so on.

In single-phase cooling systems, the cooling fluid remains in its initial phase (gas or liquid) during the entire cooling cycle, whereas in two-phase cooling systems a liquid cooling fluid evaporates when absorbing heat and condenses back into the liquid state when cooling down. Battery modules according to the present disclosure can be used in both types of cooling systems.

In a typical battery pack, a battery module comprises an approximately shoeboxsized housing containing a plurality of flat trapezoid-shaped ("prismatic") battery cells that are stacked adjacent to each other. A compression mechanism presses them together to avoid excessive swelling. Compression pads may be arranged between the stacked battery cells to allow for some swelling and to reduce the risk of fracture due to swelling.

The cooling fluid is in direct contact with at least a portion of the outer surface of each battery cell. The stack of battery cells ("cell stack") is immersed in the liquid or gaseous cooling fluid. The cell stack and the cooling fluid are contained in the housing which is delimited by walls, e.g. by a cover, a base, opposed side walls and opposed end plates. Depending on the cooling system, the housing can have an inlet, through which cooling fluid can enter the module, and an outlet through which the cooling fluid exits the module.

Guiding and directing the flow of the cooling fluid in the module is helpful in order to obtain a flow geometry that removes heat most effectively. The insulation member in European patent application EP 2 808 920 A1, for example, has ribs that form, in conjunction with beads in the cell cover of a battery cell, a coolant flow channel to guide the flow of the coolant.

It is desirable to further increase the cooling efficiency of present fluid-based battery cooling systems, so that the battery cells are held within their operating temperature range with less pumping power and smaller heat exchangers. It is also desirable to build battery cooling systems formed by a smaller number of physical parts, as this can make assembly quicker and reduce assembly cost.

The present disclosure attempts to address these needs. It provides, in a first aspect, a battery module for a propulsion battery system of an electrical vehicle, comprising
a) a plurality of battery cells, arranged in a cooling volume for containing a cooling fluid for cooling the battery cells, each battery cell comprising an anode, a cathode and an electrolyte, and
b) a plurality of wall elements, attached to each other such as to define the cooling volume, wherein one of the wall elements is a structured wall element which comprises an inner surface, oriented towards one of the battery cells, for contacting the cooling fluid, and an outer surface forming an exterior surface of the battery module, characterized in that the inner surface is shaped to define a plurality of grooves or a plurality of ridges for increasing the contact surface between the structured wall element and the cooling fluid, and for directing the flow of the cooling fluid in the cooling volume.

The grooves or ridges in the structured wall element provide for guidance of the flow of cooling fluid in directions parallel to the grooves/ridges. Depending on the orientation of the ridges/grooves, the flow of the cooling fluid may be more even, resulting in less turbulence and a more laminar flow, which in turn facilitates higher flow speeds and/or lower pumping power. Also, the grooves or ridges may be arranged on the inner surface such that a greater portion of the cooling fluid is directed to areas of the cooling volume where more heat is generated, and more cooling is required, whereas a smaller portion of the cooling fluid is directed to areas of the cooling volume where less heat is generated and less cooling is required.

The grooves/ridges on the inner surface of the structured wall element also increase the surface area of the structured wall element, compared to a flat inner surface without grooves or ridges. The larger surface area allows for a more effective heat transfer from the cooling fluid to the structured wall element. Since the outer surface of the structured wall element forms an exterior surface of the battery module, the structured wall element can discharge the heat to the ambient air by radiation or convection or potentially by conduction. The combination of a larger surface area and a smoother flow can contribute to more effective cooling of the battery module.

A battery system of an electric vehicle comprises a battery pack and a battery management system. The battery pack is made of several battery modules. Each battery module contains a few battery cells up to some tens of battery cells in a housing. Each battery cell has an anode and a cathode and an electrolyte and can be recharged. Within the module some cells are electrically connected in series to provide a higher output voltage than an individual cell, and some cells are electrically connected in parallel to provide a higher output current than an individual cell. Often, battery modules are the size of a (smaller or larger) shoebox and have a similar, generally cubical shape. Typical battery modules provide some "infrastructure" for the cells in it, like common electrical terminals for charging/discharging, common control electronics and common cooling means.

Prismatic battery cells are generally delimited by flat hard outer surfaces. Pouch cells are generally thinner and have a soft outer surface. Cylindrical battery cells have a tubular shape and comprise a hard casing. Button cells are generally flat with a hard casing. All types of cells can be stacked. Battery modules according to the present disclosure may contain battery cells of any of these types. In preferred embodiments the battery cells comprised in the battery module are prismatic battery cells.

To obtain a particularly space-saving arrangement, a plurality of battery cells of identical outer shape may be stacked. The stack of battery cells extends in a "stack direction". The stack direction, as used herein, is the direction defined by a line connecting a surface feature at a specific location of a first battery cell in a stack of battery cells with the corresponding identical surface feature at the corresponding specific location of a second, identical battery cell in the stack.

Where a stack of battery cells is arranged in a brick-shaped cooling volume defined by a plurality of wall elements, the battery cells may be arranged such that the stack direction is parallel to the opposed parallel side walls and parallel to the opposed parallel base and cover. The opposed parallel end plates may then be oriented orthogonally to the stack direction. One of these end plates may be the structured wall element, the inner surface of which is oriented towards the battery cells and is shaped to define grooves or ridges which help increase the contact surface between the end plate and the cooling fluid and help direct the flow of the cooling fluid in the cooling volume.

Alternatively, however, one of the side walls or the base or the cover may be the structured wall element, the inner surface of which is oriented towards the battery cells and is shaped to define grooves or ridges which help increase the contact surface between the end plate and the cooling fluid and help direct the flow of the cooling fluid in the cooling volume.

A battery module according to the present disclosure may have more than one structured wall element, so that, for example, a first end plate and an opposed second end plate may both be a respective structured wall element having the grooves/ridges described above. This would enhance the cooling capability of the battery module and direct the flow of cooling fluid in two locations inside the module. In certain embodiments, another wall element such as a base or a cover of the battery module may be the structured wall element having the grooves or ridges.

Hence in certain embodiments of a battery module according to the present disclosure, the battery cells are stacked in a stack direction. In certain of these embodiments, the structured wall element is an end plate delimiting the cooling volume in the stack direction.

A stack of prismatic battery cells in a battery module is often arranged between opposed pressure plates. The pressure plates exert pressure on the outermost battery cells of the stack and thereby compress the stack of cells between them in the stack direction. Where the cooling volume is delimited in a stack direction by the structured wall element, the pressure plate is arranged between the inner surface of the structured wall element and the outermost battery cell closest to the structured wall element.

The pressure plate may be flat. A flat pressure plate can distribute its pressure more evenly onto a flat surface of the outermost battery cell. While one major surface of the pressure plate is pressed onto the battery cell, its opposed major surface faces the inner surface of the structured wall element. Where the inner surface is shaped to define grooves, the flat pressure plate can cover the grooves so that the grooves, in combination with the pressure plate, now form closed channels through which the cooling fluid can flow. Where the inner surface is shaped to define ridges, the pressure plate can contact the ridges so that the space between adjacent ridges, in combination with the pressure plate, now forms closed channels through which the cooling fluid can flow.

Should the ridges, or the inner surface forming grooves, not be flat, the pressure plate can comprise a shape that corresponds to the surface of the ridges or to the shape of the inner surface which allows the combination of the grooves/ridges with the pressure plate to form channels through which cooling fluid can flow.

Hence generally, in certain embodiments, in which the inner surface is shaped to define a plurality of grooves, the battery module further comprises a pressure plate for exerting pressure on one of the battery cells, wherein the pressure plate is arranged between the inner surface of the structured wall element and the one of the battery cells.

In certain embodiments, in which the inner surface is shaped to define a plurality of grooves, the battery module further comprises a pressure plate for exerting pressure on one of the battery cells, wherein the pressure plate is arranged between the inner surface of the structured wall element and the one of the battery cells and wherein the pressure plate covers the grooves such as to form channels through which the cooling fluid can flow.

Closed channels provide a strong guidance for the flow of cooling fluid and can help create a desired flow pattern of the cooling fluid in the cooling volume of the battery module.

The battery cells are arranged in a cooling volume that, in use, contains a cooling fluid by which the battery cells can be cooled. The cooling volume is large enough to accommodate the battery cells and the cooling fluid. The cooling volume is defined by the wall elements. The cooling volume is delimited by the wall elements. The cooling volume is thus arranged between the wall elements. The wall elements define the geometric volume and the geometric extension of the cooling volume, disregarding any openings for entry or exit of the cooling fluid and any hoses or cables in fluid connection with the cooling volume.

The geometrical volume of the cooling volume is typically between 10 cm³ (cubic centimetres) and 10'000 cm³. The cooling volume may be fixed. Alternatively, the cooling volume may be variable, e.g. where extension bellows are provided, such as to accommodate for thermal expansion of the cooling fluid.

The cooling volume may be in fluid communication with other volumes containing cooling fluid, such as, for example, tubes, hoses, ducts, etc. Such elements may be used to transport cooling fluid into the cooling volume or remove cooling fluid from the cooling volume. Such hoses, ducts or tubes are not considered to be part of the cooling volume.

The wall elements are attached to each other such as to define the cooling volume. The wall elements may form a wall delimiting the cooling volume. The wall elements may thus form a containment for the cooling fluid. Since a wall element is part of a containment of the cooling fluid, it may be in contact with the cooling fluid. A wall element is therefore made from a material that is chemically compatible with the cooling fluid. A wall element, or all wall elements, may be made from, or comprise, a metal, an alloy or a polymeric material, for example.

In certain embodiments, a first wall element forms a base, two further wall elements form two opposed parallel side walls, two further wall elements form two opposed end plates of a cooling volume, and second wall element forms a cover that can be attached to the side walls and to the end plates in a fluid-tight manner, so that the wall elements define the cooling volume.

Generally, a wall element may be flat, i.e. it may comprise two opposed parallel major surfaces, spaced from each other in a thickness direction.

In certain other embodiments, a first wall element forms a base, side walls, and end plates of a cooling volume, and second wall element forms a cover of the cooling volume that can be attached to the first wall element in a fluid-tight manner, so that the first wall element and the second wall element define the cooling volume.

Generally, the wall elements define the cooling volume such that it is tight for the cooling liquid, i.e. the cooling liquid cannot leak out of the cooling volume under the pressure prevailing in the cooling volume under operational conditions. In particular, the wall elements may be attached to each other at joints such that each joint is tight for the cooling liquid.

A wall element may, for example, be a base, a cover, a side wall, or an end plate. In certain embodiments, the cooling volume is a brick-shaped cooling volume. A brick-shaped cooling volume may be defined by a base, two opposed parallel side walls, two opposed parallel end plates, and a cover, each arranged at right angles.

A wall element may have an inner surface and an outer surface. An inner surface of a wall element is a surface that, after assembly of the battery module, is oriented towards one of the battery cells, i.e. towards the cooling volume. An outer surface of a wall element is a surface that is oriented away from the battery cells, i.e. away from the cooling volume. It is understood that the orientation of an outer or inner surface of a wall element is determined by its large-scale geometry and is independent from small-scale features on the surface.

At least one wall element, namely the structured wall element, has an outer surface which forms an exterior surface of the battery module. In operation, this structured wall element is in contact with the cooling fluid on its inner surface, while its outer surface is an external surface of the battery module. An external surface of the battery module may be in contact with ambient air outside the battery module. In that case, heat may flow from the cooling fluid, via the inner surface, into the structured wall element and, via the outer surface, into the ambient air, which may remove the heat from the vicinity of the outer surface by convection, e.g. gravitational or forced convection.

Independent of the orientation of the side walls, the base and the cover, in embodiments where the battery cells are stacked in a stack direction, one may define the end plates to be two wall elements which are opposed and parallel to each other, and which are oriented such that a surface normal on their respective inner surfaces is parallel to the stack direction. The structured wall element may be an end plate.

The cooling volume defined by the wall elements may be formed such that in use the cooling fluid is in contact with at least a portion of an outer surface of each of the battery cells. A battery cell may comprise a cell housing in which the anode, the cathode and the electrolyte are arranged. In case of all the battery cells comprising a cell housing, the cooling volume may be formed such that the cooling fluid is in contact with at least a portion of an outer surface of the respective cell housing of each of the battery cells.

Also, the cooling volume may be formed such that in use the cooling fluid is in contact with the inner surface of the structured wall element which comprises the inner surface and an outer surface forming an exterior surface of the battery module.

In certain embodiments the battery module is designed to facilitate a flow of the cooling fluid through the cooling volume to remove heat from the battery cells. While in certain embodiments the cooling volume is a closed volume with no fluid flowing into the cooling volume and no cooling fluid leaving the cooling volume, in other embodiments the cooling volume is in fluid communication with elements outside of the battery module. In those latter embodiments the battery module may comprise an inlet, in fluid communication with the cooling volume, to let cooling fluid enter the cooling volume. The battery module may comprise an outlet, in fluid communication with the cooling volume, to let cooling fluid exit the cooling volume. The wall elements of the battery module may be shaped and arranged suitably to define a flow path for the cooling fluid from the inlet through the cooling volume to the outlet. The inlet may be comprised in a first wall element of the plurality of wall elements. In particular, the inlet may be comprised in the structured wall element which comprises an inner surface which is shaped to define a plurality of grooves or ridges. The outlet may be comprised in the first wall element or in a second wall element. In particular, the outlet may be comprised in the structured wall element which comprises an inner surface which is shaped to define a plurality of grooves or ridges.

Hence in certain embodiments of the battery module according to the present disclosure, the structured wall element comprises an inlet through which the cooling fluid can enter the cooling volume. The inlet is in in fluid communication with the cooling volume when the battery module is in operation. In these embodiments the structured wall element provides two functionalities, namely to direct the flow of cooling liquid and to accommodate the inlet. Such an arrangement may be particularly space-saving.

Independent from the structured wall element comprising an inlet or not, in certain embodiments of the battery module according to the present disclosure, the structured wall element comprises an outlet through which the cooling fluid can exit the cooling volume. The outlet is in in fluid communication with the cooling volume when the battery module is in operation. In these embodiments the structured wall element provides two functionalities, namely to direct the flow of cooling liquid and to accommodate the outlet. Such an arrangement may be particularly space-saving.

In certain preferred embodiments the structured wall element comprises an inlet and an outlet. Such an arrangement may be even more space-saving. Furthermore, the grooves/ridges in the inner surface of the structured wall element may provide for a direct and short flow path of cooling fluid from the inlet to the outlet along the inner surface, which may be desirable in certain battery systems. In certain of these embodiments the structured wall element comprises a second inlet and/or a second outlet. Such an additional inlet and/or outlet may be useful to generate a specific flow pattern of the cooling fluid in the cooling volume, and thereby to provide more effective cooling of the battery cells.

Immersion cooling of the battery cells in the battery module may be best achieved with a cooling fluid that is liquid at ambient conditions, i.e. at 20 °C and at atmospheric pressure of 1013 hectopascal (hPa). In operation, i.e. when heated, the cooling fluid may remain liquid in the entire operational temperature range of the battery module. It may, for example, remain liquid in the temperature range of between 20°C and 60°C at a pressure 1013 hPa. Such cooling fluids may be usable in single-phase liquid immersion cooling systems. Hence in a battery module according to the present disclosure the cooling volume may contain a cooling fluid which is liquid at 20°C and at 1013 hPa.

Alternatively, the cooling fluid may evaporate in operation, i.e. when heated, and be gaseous at the upper end of the operational temperature range. It may, for example, be liquid at 20 °C and at 1013 hPa and be gaseous at 60°C and 1013 hPa. Such cooling fluids may be usable in two-phase cooling systems.

Alternatively, the cooling fluid may be gaseous at 20°C and at a pressure of 1013 hPa. The cooling fluid may be gaseous at 60°C and at a pressure of 1013 hPa.

Suitable cooling fluids may comprise, or consist essentially of, halogenated compounds, oils (e.g., mineral oils, synthetic oils, or silicone oils), or combinations thereof. In some embodiments, the halogenated compounds may comprise fluorinated compounds, chlorinated compounds, brominated compounds, or combinations thereof. In some embodiments, the halogenated compounds may comprise, or consist essentially of, fluorinated compounds.

In some embodiments, the cooling fluid has an electrical conductivity at 25 °C of less than about 10⁻⁵ S/cm (Siemens per centimetre), less than about 10⁻⁶ S/cm, less than 10⁻⁷ S/cm, or less than about 10⁻¹⁰ S/cm.

In some embodiments, the cooling fluid may have a dielectric constant that is less than about 25, less than about 15, or less than about 10, as measured in accordance with ASTM D150 at room temperature.

In some embodiments, the cooling fluid has a melting point of less than -40 °C and a boiling point of greater than 80°C for single phase cooling. In some embodiments, the cooling fluid has a thermal conductivity of 0.05 W/m-K (Watt per meter and Kelvin) or higher. In some embodiments, the cooling fluid has a specific heat capacity of 800 J/kg-K (Joule per kilogram and Kelvin) or more. In some embodiments, the cooling fluid has a viscosity of 2 cSt (centistokes) or lower at 20°C. In some embodiments, the cooling fluid is non-flammable (e.g., has no closed cup flashpoint) or has low flammability (e.g., a flash point of greater than 37 °C).

In some embodiments, fluorinated compounds having such properties may comprise, or consist of, any one, or a combination, of fluoroethers, fluorocarbons, fluoroketones, fluorosulfones, and fluoroolefins. In some embodiments fluorinated compounds having such properties may comprise, or consist of, partially fluorinated compounds, perfluorinated compounds, or a combination thereof.

As used herein, "fluoro-" (for example, in reference to a group or moiety, such as in the case of "fluoroalkylene" or "fluoroalkyl" or "fluorocarbon") or "fluorinated" means (i) partially fluorinated such that there is at least one carbon-bonded hydrogen atom, or (ii) perfluorinated.

As used herein, "perfluoro-" (for example, in reference to a group or moiety, such as in the case of "perfluoroalkylene" or "perfluoroalkyl" or "perfluorocarbon") or "perfluorinated" means completely fluorinated such that, except as may be otherwise indicated, there are no carbon-bonded hydrogen atoms replaceable with fluorine.

The cooling fluid may be a phase-change cooling fluid. Phase-change cooling fluids are in their liquid phase at a first, lower temperature in the battery cooling systems described herein, and they are in their gaseous phase at a second, higher temperature. The first, lower temperature may be a temperature prevailing in a heat exchanger or in a radiator of the battery system. The second, higher temperature may be a temperature prevailing in the vicinity of a battery cell when the battery cell is charged or discharged.

Certain traditional cooling fluids can be used for cooling battery cells in a battery module according to the present invention, such as water-glycole-mixtures or certain oils. Other advantageous cooling fluids are certain fluorinated compounds, like for example engineered fluids available under the trade name 3M™ Novec™ from 3M Deutschland GmbH.

In certain embodiments, the battery module is adapted to contain a dielectric cooling fluid, i.e. a cooling fluid that is electrically non-conductive. Dielectric fluids are fluids having a volume resistivity of 10⁷ Ohm-cm or higher, preferably of 10⁸ Ohm-cm or higher. Preferred dielectric fluids have a dielectric strength of 35 kilovolt (kV), measured across a 1/10 inch (2.54 mm) wide gap. A battery module adapted to contain a dielectric cooling fluid may have a simpler technical design, because measures to keep elements on electrical potential, i.e. "live" elements, separated from the cooling fluid may not be necessary.

Hence generally, in certain embodiments, the cooling fluid is a dielectric cooling fluid having a volume resistivity of 10⁷ Ohm-cm or higher.

While this disclosure focuses on the cooling of battery cells, battery cells may require heating under certain circumstances. The battery module as described herein as well as the cooling fluid described herein may be suitable for both purposes, cooling and heating. A fluid that is useful for cooling and for heating is referred to as a cooling fluid herein, as it is suitable for cooling. Similarly, the cooling volume is a volume for containing such a dual-purpose cooling fluid.

Each groove in the inner surface of the structured wall element provides a trench in which the cooling fluid can flow. Similarly, two adjacent parallel ridges in the inner surface of the structured wall element form a space between them in which the cooling fluid can flow. For a given viscosity of the cooling fluid, narrower cross section of trenches of grooves and smaller cross section of spaces between adjacent ridges generate higher resistance to flow of the cooling fluid than wider grooves or volumes. In embodiments in which the cooling fluid has a lower viscosity, the cross section of parallel grooves or the cross section of the volume between two adjacent parallel ridges can be smaller than in cases where the cooling fluid has a higher viscosity.

A groove defined by the shape of the inner surface is an element that recesses from the inner surface. Where the inner surface is shaped to define a plurality of ridges, a groove may be the space between two adjacent ridges.

A groove may have a certain length. Generally, in the context of this disclosure, a recess in the inner wall is considered a groove if its length is larger than its width.

In certain embodiments the grooves are parallel to each other. In certain embodiments the ridges are parallel to each other. In certain embodiments the grooves or the ridges are parallel to each other. Parallel grooves or parallel ridges direct the flow of cooling fluid more uniformly and on a larger scale than non-parallel grooves or ridges. They can thus provide a more uniform flow pattern with less turbulence, which may be easier to simulate or predict and more stable as the electric vehicle moves over uneven roads.

In embodiments in which the structured wall element comprises an inlet in an inlet portion of the structured wall element and an outlet in an outlet portion of the structured wall element, grooves or ridges in the structured wall element can help create a stronger flow of cooling fluid directly from inlet to outlet. Grooves or ridges extending between the inlet portion and the outlet portion may help create this stronger flow. A stronger direct flow may be desirable if or when the battery cells in the cooling volume do not require much cooling power. The grooves or ridges extending between the inlet portion and the outlet portion do not necessarily begin in the inlet portion or do not necessarily end in the outlet portion, but their general direction is oriented along a line connecting the inlet portion with the outlet portion.

Hence in certain embodiments, in which the structured wall element comprises an inlet through which the cooling fluid can enter the cooling volume and an outlet through which the cooling fluid can exit the cooling volume, the grooves or ridges extend between an inlet portion of the structured wall element comprising the inlet, and an outlet portion of the structured wall element comprising the outlet. Grooves in the inner surface may have many different shapes and cross sections. A groove may have, for example, a semi-circular or a U-shaped cross section, a triangular or a V-shaped cross section, a rectangular cross section or a semi-elliptical cross section.

Not all grooves may have the same cross section, so that, for example, a first groove of the plurality of grooves has a semi-circular cross section, and a second groove of the plurality of grooves has a rectangular cross section. However, in certain embodiments, all grooves have the same cross section.

A groove may have a fixed cross section over its length. Alternatively, a groove may have a variable cross section over its length, in other words, its cross section may vary in width (in directions parallel to the inner surface), or depth (in directions orthogonal to the inner surface), shape or size between a first position in length direction of the groove and a second position in its length direction.

The inner surface may be shaped to define a plurality of ridges. A ridge, in the context of this disclosure, is an element that protrudes from the inner surface. The ridges on the inner surface may have many different shapes and cross sections. A ridge may have, for example, a semi-circular or a U-shaped cross section, a triangular or a V-shaped cross section, a rectangular cross section or a semi-elliptical cross section.

Not all ridges may have the same cross section, so that, for example, a first ridge of the plurality of ridges has a semi-circular cross section, and a second ridge of the plurality of ridges has a rectangular cross section.

A ridge may have a fixed cross section over its length. Alternatively, a ridge may have a variable cross section over its length, in other words, its cross section may vary in width (in directions parallel to the inner surface), or depth (in directions orthogonal to the inner surface), shape or size between a first position in length direction of the ridge and a second position in its length direction.

It may be desirable to modify the flow of cooling fluid in the battery module without having to replace the structured wall element comprising the grooves or ridges in its inner surface, e.g. when the number or type or shape of battery cells in the battery module changes. A modification of the flow pattern in the vicinity of the structured wall element may be sufficient to change the flow pattern in the module. For that purpose, a flow-blocking element may be used that is attached to the inner surface of the structured wall element and that protrudes into one of the grooves, into a plurality of the grooves or into all of the grooves and reduces or blocks completely the flow of cooling fluid in the groove(s) into which it protrudes. If the inner surface is shaped to form ridges, the flow-blocking element may be attached to the inner surface and protrude into one of the spaces between adjacent ridges, into a plurality of the spaces between adjacent ridges or into all of the spaces between adjacent ridges, and reduce or block completely the flow of cooling fluid in the space(s) between adjacent ridges into which it protrudes.

Such a flow-blocker element may thus reduce or block the flow in the part of the groove or space between adjacent ridges where it protrudes into that groove or space, while the flow in other portions of the groove or in other parts of the space between adjacent ridges may be unobstructed.

Hence generally, in certain embodiments of a battery module according to the present disclosure, the battery module further comprises a flow-blocking element, attached to the inner surface, and adapted to reduce, or to block completely, a flow of cooling fluid in a groove or between two adjacent ridges.

The flow-blocking element may be attached to the inner surface permanently. However, it may be desirable to remove a flow-blocking element or remove one flow-blocking element and replace it with a different one, e.g. one that blocks more grooves, less grooves or different grooves in the inner surface of the structured wall element than the flow-blocking element used previously. This may be instrumental in adapting the flow pattern of the cooling fluid in the battery module to new circumstances.

Therefore, generally, in certain embodiments of the battery module of the present disclosure, the flow-blocking element is attached to the inner surface permanently. In certain other embodiments the flow-blocking element is attached to the inner surface removably. A removable attachment allows for removal without damaging the flow-blocking-element or the structured wall element.

A typical battery module has a design lifetime of several years. During such a lifetime, a flow-blocking element in a battery module according to the present disclosure is in direct contact with the cooling fluid which flows in the grooves or between the ridges. Therefore, the outer surface of the flow-blocking element is formed by a material that is chemically compatible with the cooling fluid, e.g. a material that does not decompose when in prolonged contact with the cooling fluid and that does not cause the cooling fluid to decompose. The entire flow-blocking element may be made from such a compatible material or it may comprise such compatible materials.

Cooling fluids for battery modules may be, for example, water-glycole mixtures, certain oils as described above, certain halogenated compounds or certain fluorinated compounds such as , for example, 3M™ Novec™ fluids. Materials that may be compatible with certain ones of such fluids are, for example, polypropylene, polyethylene, polyester, polyamide, polyimide, or polyvinylchloride, or materials that comprise for example, polypropylene, polyethylene, polyester, polyamide, polyimide, or polyvinylchloride, or mixtures of these.

Hence in certain embodiments the flow-blocking element is made from, or comprises, polypropylene, polyethylene, polyester, polyamide, polyimide, or polyvinylchloride.

The flow-blocking element is adapted to reduce or to block the flow of cooling fluid in a groove or between two adjacent ridges. For that purpose, the flow-blocking element may comprise protrusions each of which protrudes into a groove or into a space between adjacent ridges to block the flow of cooling fluid. Such protrusions are also referred to as "teeth" herein, and a single protrusion as "tooth".

The grooves and the spaces between adjacent ridges can have different shapes, i.e. different cross sections, such as for example a rectangular, a triangular, a semi-elliptical or a semi-circular cross section. For effective complete blocking of fluid flow, the shape of the tooth fits exactly into the shape of the groove or space between adjacent ridges which the tooth is supposed to block. In other words, the cross section of the tooth fits exactly into the cross section of the groove or of the space between adjacent ridges which the tooth is supposed to block. In other words, each tooth is shaped to correspond to a cross section of a groove or to a cross section of a space between adjacent ridges, such that the tooth can block completely a flow of cooling fluid in the groove or between the two adjacent ridges.

Hence generally, in certain embodiments the flow-blocking element is shaped to form a plurality of teeth, each tooth being shaped to correspond to a cross section of a groove or to a cross section of a space between adjacent ridges, such that the tooth can block completely a flow of cooling fluid in the groove or between the two adjacent ridges.

Alternatively, the flow-blocking element may have a trapezoidal shape, such as an elongated shape with a rectangular cross section, or a cylindrical shape, such as an elongated shape with a circular cross section. In such embodiments, the flow-blocking element may not have protrusions or teeth to protrude into grooves. Instead, the flow-blocking element may be adapted to be accommodated in a portion of the inner wall that is free of grooves or ridges such as to reduce, or block completely, the flow of cooling fluid in a plurality of the grooves or between two of the ridges.

Before a battery module according to the present disclosure is put into operation, it is filled with the cooling fluid. It may be filled partially with the cooling fluid, leaving some space filled with air or another fluid. It may be filled with the cooling fluid completely. A battery module is already considered completely filled if only negligible spaces in the battery module remain free of cooling fluid, and if no measures were taken to intentionally leave such spaces free.

In a further aspect, the present disclosure also provides a battery system for an electrical or hybrid-electrical vehicle comprising a battery module as described herein. A battery module as described herein provides improved cooling to battery cells in its cooling volume and may therefore enable use of a less complex battery system.

In a further aspect, the present disclosure also provides an electrical or hybrid-electrical vehicle comprising a battery system as described in the preceding paragraph.

The invention will now be described in more detail with reference to the following Figures exemplifying particular embodiments of the invention:
- Fig. 1: Perspective view of a first battery module according to this disclosure;
- Fig. 2: Exploded view of the first battery module;
- Fig. 3: Perspective view of an end plate of the first battery module;
- Fig. 4: Perspective view of an alternative end plate for the first battery module, and a first flow-blocking element;
- Fig. 5: Perspective view of the first flow-blocking element; and
- Fig. 6: Perspective view of the end plate of Figure 3, and a second flow-blocking element.

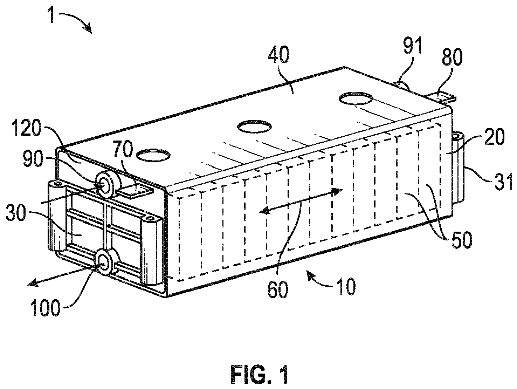

The perspective sketch of **Figure 1** illustrates an exemplary first battery module 1 for a propulsion battery system of an electrical vehicle according to the present disclosure. The first battery module 1 has the elongated trapezoidal shape of a shoebox and comprises wall elements, namely a base plate 10, two opposed parallel side walls 20 (of which only one is visible), two opposed parallel end plates 30, 31 and a cover 40, which are attached to each other. The wall elements 10, 20, 30, 31, 40 define a cooling volume between them, which is a volume inside the battery module 1. The outer surface 120 of the first (left-hand) end plate 30 forms an exterior surface of the battery module 1.

The battery module 1 comprises a stack of twelve prismatic battery cells 50, shown in dashed lines as they would appear through a transparent side wall 20. The battery cells 50 are arranged next to each other and stacked in a stack direction, indicated by arrow 60, between the first end plate 30 and the second end plate 31. Details of the battery cells 50 and of the spaces between them are not relevant in the context of this disclosure and are therefore not shown.

Each of the battery cells 50 comprises a cathode, an anode and an electrolyte (not shown), which are contained in a housing of the battery cell 50. The cathodes and anodes of the battery cells 50 are electrically connected with cathodes and anodes of other battery cells 50 in series or parallel to provide a desired output voltage and a desired output current of the module 1. The electrical output of the battery cells 50 of the module 1 is made available through a positive module contact 70 and a negative module contact 80, which protrude from respective opposite end plates 30, 31 of the battery module 1.

In use, the battery module 1 contains a liquid cooling fluid (not shown) in which the battery cells 50 are immersed at least partially. The cooling fluid is contained in the cooling volume defined by the wall elements 10, 20, 30, 31, 40. The cooling fluid follows a flow path inside the battery module 1 to carry away heat from the battery cells 50. Cooling fluid can enter the module 1 at an inlet 90, and cooling fluid can leave the battery module 1 at an outlet 100. Both inlet 90 and outlet 100 are formed by apertures through the first end plate 30 at the left side (in the Figure) of the battery module 1. The opposite end plate 31 has a further inlet (not visible) and a further outlet 91, through which cooling fluid can enter or leave the battery module 1. This configuration allows the cooling fluid to flow through the outlet 91 on the opposite end plate 31 to a further battery module (not shown), and the further inlet allows cooling fluid coming from the further battery module to flow into the battery module 1. A pump (not shown) makes the cooling fluid flow through the inlet 90 into the battery module 1, where it takes up heat from the battery cells 50, leaving the battery module 1 through the second outlet 91 to a cooling device (not shown), where it is cooled down, and back to the battery module 1 through the inlet 90.

In alternative battery modules, the second end plate 31 has no inlet and no outlet. In these battery modules the flow path in the battery module may have a U-shape, wherein cooling fluid flows generally from the inlet 90 towards the second end plate 31, returns towards the first end plate 30 and leaves the battery module 1 through the outlet 100. Progressing along its flow path, the cooling fluid absorbs heat from the battery cells 50, so that the cooling fluid leaving the battery module 1 at the outlet 100 has a higher temperature than the cooling fluid entering the battery module 1 at the inlet 90.

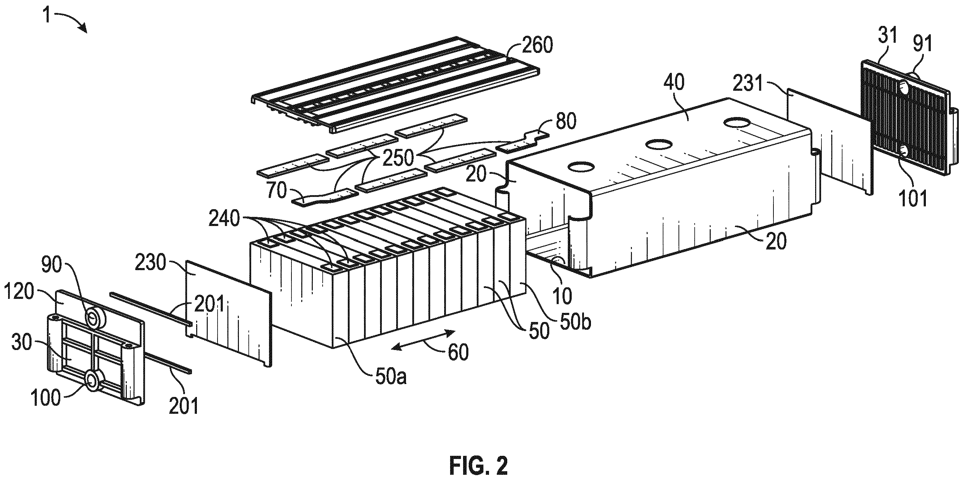

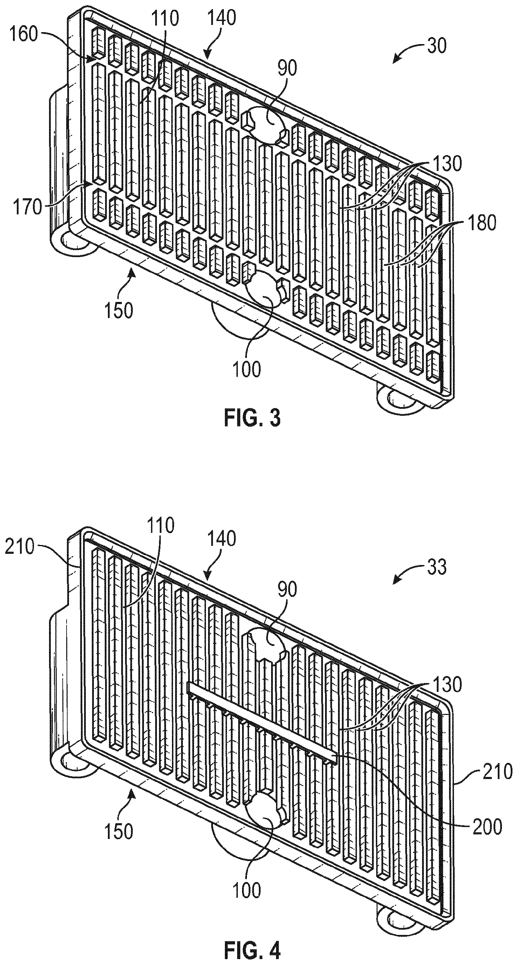

**Figure 2** is an exploded view of the battery module 1 of Figure 1. Further to the elements shown in Figure 1, Figure 2 illustrates the following elements:
Two flow-blocking elements 201, mounted on the inner surface of the first end plate 30, prevent direct flow of cooling fluid from the inlet 90 to the outlet 100 in a portion of the cooling volume close to the end plate 30, as will be explained in detail in the context of Figures 4-6.

A first pressure plate 230 is arranged between the end plate 30 and the stack of battery cells 50. The pressure plate 230 distributes pressure of the first end plate 30 in the stack direction 60 onto the full surface of the first (leftmost, in the Figure) battery cell 50a of the stack, next to the first end plate 30, to achieve a more even pressure distribution on the leftmost battery cell 50a. In an assembled state of the module 1, the end plate 30 is pressed against the pressure plate 230, which in turn is pressed against the first battery cell 50a of the stack of battery cells 50.

The pressure plate 230 is an optional element of the battery module 1, and modules 1 can be built without having a pressure plate 230. The end plate 30 may, in such cases, be in direct contact with the first battery cell 50a.

The battery module 1 comprises a second end plate 31 which performs the same functions on the opposite (right-hand) end portion of the battery module 1 as the first end plate 30 does on the left-hand end portion. The second end plate 31 comprises an inlet 101 at its bottom end and an outlet 91 at its top end. The second end plate 31 is essentially identical to the first end plate 30, and its inner surface also comprises a plurality of grooves 130 for increasing the contact surface between the second end plate 31 and the cooling fluid, and for directing the flow of the cooling fluid, as described for the first end plate 30.

Figure 2 also shows the positive and negative electrical terminals 240 of the respective battery cells 50, and seven busbars 250 which connect certain ones of the terminals 240 with each other electrically and mechanically, in order to obtain a certain voltage and collect a certain current from the battery cells 50 of the module 1. The end portions of two of the busbars 250 extend to an outside of the module 1 to form the positive module contact 70 and the negative module contact 80 shown in Figure 1.

An inner cover 260 is arranged between the battery cells 50 and the (outer) cover 40 of the module 1, in which wires and sensors can be accommodated, and which may define certain flow channels for the cooling fluid.

A second pressure plate 231 is arranged between the second end plate 31 and the rightmost battery cell 50b to distribute pressure of the second end plate 31 evenly onto the surface of the rightmost battery cell 50b.

Once the module 1 is assembled, the cooling volume is filled (partially or completely) with a cooling fluid which contacts the outer surfaces of the battery cells 50 and can take up heat from the battery cells 50. The cooling fluid is circulated through the battery module 1 via the inlets 90, 101 and the outlets 100, 91.

**Figure 3** is a perspective view of the first end plate 30 of the first battery module 1 shown in Figures 1 and 2. Figure 3 illustrates the inner surface 110 of the end plate 30, which, when mounted as shown in Figure 1, is oriented towards the battery cells 50, while its outer surface 120 is oriented away from the battery cells 50 and away from the cooling volume, towards an outside of the battery module 1.

The inner surface 110 is shaped to form a plurality of straight parallel grooves 130, extending between an inlet portion 140 and an outlet portion 150 of the end plate 30. Cooling fluid can flow through these grooves 130. Compared to a flat inner surface 110, the grooves 130 increase the contact surface between the end plate 130 and the cooling fluid, which provides for a more effective heat exchange between the cooling fluid and the end plate 30. Since the outer surface 120 of the end plate 30 is an exterior surface of the battery module 1, heat absorbed by the end plate 30 from the cooling fluid on the inner surface 110 can be conducted to the outer surface 120, where it may be absorbed by ambient air and removed via convection. By this mechanism, the grooved endplate 30 contributes to the cooling of the battery cells 50 and thereby reduces the amount of heat which the cooling fluid must remove form the battery cells 50 through the outlets 91, 100.

The grooves 130 also direct the flow of the cooling fluid in the vicinity of the end plate 30 and thereby facilitate a more laminar flow of cooling fluid from the inlet 90 to the outlet 100 in the vicinity of the end plate 30. Generally, a more laminar flow results in less turbulence, less flow resistance and greater throughput of cooling liquid. The grooved endplate 30 may therefore allow the use of a less powerful pumping mechanism for the cooling fluid.

The size and number of the grooves 130 determines, amongst other factors, the amount of cooling fluid flowing directly from the inlet 90 to the outlet 100. This amount of cooling fluid takes up heat from the outermost (leftmost) battery cell 50a. By adjusting the groove size and groove density one can adjust the amount of cooling fluid taking up heat from the outermost battery cell 50a, and thereby can adjust the temperature of the outermost battery cell 50a. Therefore, in alternative embodiments the density of the grooves 130 varies along the width of the end plate 30, the cross section of the grooves 130 may vary between grooves 130 along the width of the end plate 30 or may even vary within one groove 130 along the length of the groove 130.

In the illustrated embodiment the grooves 130 are not continuous but are interrupted, for a small portion of their length, at an upper lateral distribution channel 160 and at a lower lateral distribution channel 170. These lateral distribution channels 160, 170 allow a lateral (left-right) flow of cooling liquid and thereby facilitate a more even lateral distribution of cooling liquid entering the cooling volume through inlet 90 between grooves 130 closer to the side walls 20 and grooves 130 closer to the centre of the end plate 30.

The same grooved structure of the inner surface 110 of the first end plate 30 may be considered as a plurality of straight parallel ridges 180 that protrude from a recessed portion of the end plate 30. The space between two adjacent ridges 180 is a groove 130 as described above. Hence a description of the structure shown in Figure 3 in terms of ridges 180 is equivalent to a description in terms of grooves 130. The resulting grooved structure provides the same beneficial effects, independent of how it is described.

The second end plate 31 of the battery module 1 has the same inner surface 110 shaped to define a plurality of grooves 130 or, equivalently, of ridges 180 to increase the contact surface between the second end plate 31 and the cooling fluid, and for directing the flow of the cooling fluid in the vicinity of the second end plate 31. In alternative embodiments, in particular those in which the second end plate 31 comprises no inlet 101 and/or no outlet 91, no lateral distribution channels 160, 170 are formed by the inner surface of the end plate 31.

In certain battery modules the direct flow of cooling fluid from the inlet 90 along grooves 130 to the outlet 100 in the same end plate 30 may not be desired, as it may render the cooling less efficient. A separate flow-blocking element, e.g. a toothed bar, may be attached to the inner surface 110 of the end plate 30 to prevent a direct flow of cooling fluid from the inlet 90 to the outlet 100.

Once the battery module 1 is assembled, the grooved end plate 30 is pressed against the flat pressure plate 230, and the raised portions of the end plate 30 contact the pressure plate 230. Thereby the pressure plate 230 covers the grooves 130, so that the covered grooves 130 form channels through which cooling fluid can flow from the inlet 90 towards the outlet 100.

**Figure 4** is a perspective view of a third end plate 33, usable in a battery module according to the present disclosure. The third end plate 33 is identical with the first end plate 30 except that its inner surface 110 is not provided with lateral distribution channels 160, 170, so that the grooves 130 extend without interruption from the inlet portion 140 to the outlet portion 150.

A flow-blocking element 200 is shown engaged with the inner surface 110. It has the shape of an elongated toothed bar, each of its nine "teeth" having a profile that corresponds to the profile of a groove 130. Thereby the flow-blocker element 200 can close nine grooves 130 and prevent cooling fluid from flowing directly from the inlet 90 to the outlet 100 through those nine grooves. Advantageously the flow-blocking element 200 is arranged half-way between the inlet 90 and the outlet 100, so that in the lateral centre of the end plate 33 no cooling fluid can flow directly from inlet 90 to outlet 100, whereas in the laterally peripheral portions of the end plate 33, closer to its side edges 210, cooling fluid can flow from the inlet portion 140 to the outlet portion 150.

Depending on the thermal requirements of the battery module 1, the flow-blocking element 200 can have more teeth to block more grooves 130, or less teeth to block less grooves 130.

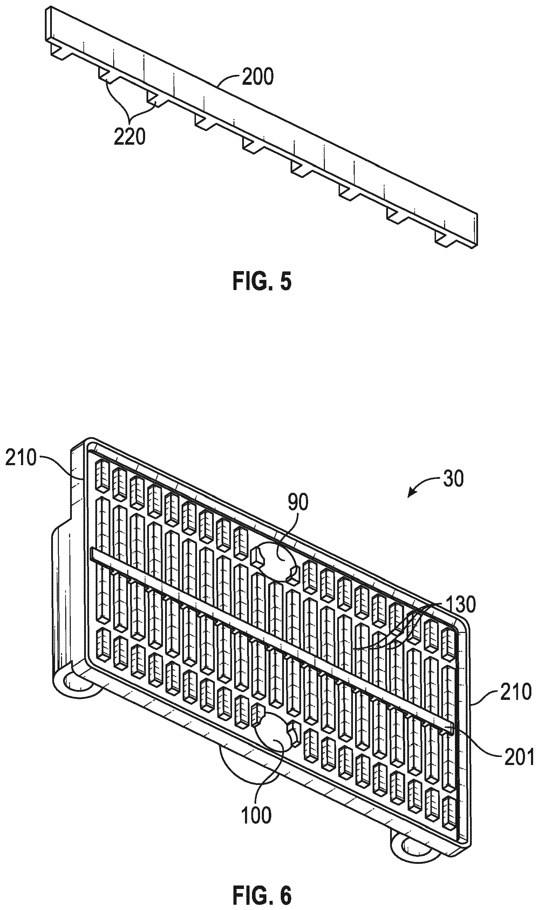

**Figure 5** shows, in a perspective view, the flow-blocking element 200 of Figure 4 in more detail. Its teeth 220 have a rectangular profile, which corresponds to the rectangular profile of the grooves 130 in the third end plate 33 shown in Figure 4.

The flow-blocking element 200 is made from a resilient material, such as a polymeric material or a resilient metal, that is chemically compatible with the cooling fluid. In other words, the material is not attacked by the chemistry of the cooling fluid, nor is the chemistry of the cooling fluid and its properties affected by the presence of the material of the flow-blocking element 200. By virtue of its resilience, the flow-blocking element 200 can be engaged with the inner surface 110 of the end plate 33 by pressing its teeth 220 into the grooves 130, so that by friction the flow-blocking element 200 keeps its position on the inner surface 110. Optionally, its position can be secured further or instead, by using dedicated fastening means like latches or screws or adhesive.

**Figure 6** illustrates, in another perspective view, a further flow-blocking element 201, similar to the flow-blocking element 200 shown in Figures 4 and 5, installed on the first end plate 30 shown in Figure 3. This further flow-blocking element 201 extends laterally between the side edges 210 and closes all the grooves 130, so that no direct flow of cooling fluid from the inlet 90 through the grooves 130 to the outlet 100 can occur.

Certain flow-blocking elements 200, 201 may be adapted to block a groove 130 only partially, while blocking other grooves 130 completely. Such designs may allow to generate a very specific flow pattern of the cooling fluid in the vicinity of the end plate 30 on which the flow-blocking 200, 201 is installed, and thus to optimize the cooling of the battery cells 50 in the module 1.

One possible reason to install a flow-blocking element 200, 201, and to thereby reduce or prevent the direct flow of cooling fluid from inlet 90 to outlet 100 is to avoid excessive cooling of the battery cell 50a that is closest to the inner surface 110 of the end plate 30. A strong flow of cooling fluid directly from inlet 90 to outlet 100 removes much heat from that one battery cell 50a, while other battery cells 50 are cooled to a lesser degree, because a weaker flow of cooling fluid removes heat from them. Installation of a flow-blocking element 200, 201 can reduce the excessive flow of cooling fluid next to the battery cell 50a closest to the end plate 30 and may thereby help to provide a more balanced cooling of the battery cells 50.

It is contemplated that more than one flow-blocking element 200, 201 can be installed on the inner surface 110 of an end plate 30, so that not only the flow rate of the cooling fluid from inlet 90 to outlet 100 can be adjusted, but also the geometric flow pattern can be tailored.

In a further aspect, flow-blocking elements 200, 201 can be installed on a general-purpose end plate 30 in dependence on the type or number of battery cells 50 that are arranged in the cooling volume. Flow-blocking elements 200, 201 may thus be used to customize an otherwise universal battery module 1 for a specific type and/or to a specific number of battery cells 50, facilitating adequate cooling for a greater variety of module designs. By choosing one or more flow-blocking elements 200, 201 of specific shapes or sizes and installing them in a specific configuration on the inner surface 110, a standardized battery module 1 and a standardized end plate 30 can thus be adapted to a varying number and type of battery cells 50 in the cooling volume, which can result in lower manufacturing cost for the battery modules 1.

A flow-blocking element 200, 201 may be removable from the end plate 30, 31 on which it is mounted. Should the battery cells 50 in a battery module 1 be replaced with new battery cells 50 of a different type, which might require a different flow pattern or flow rate of the cooling fluid to operate efficiently, a previously installed flow-blocking element 200, 201 may be removed and replaced with a different flow-blocking element 200, 201 that is adapted to provide an adequate flow rate and flow pattern for the new battery cells 50.

## Claims

1. Battery module (1) for a propulsion battery system of an electrical vehicle, comprising
a) a plurality of battery cells (50), arranged in a cooling volume for containing a cooling fluid for cooling the battery cells, each battery cell comprising an anode, a cathode and an electrolyte, and
b) a plurality of wall elements (10, 20, 30, 31, 33, 40), attached to each other such as to define the cooling volume, wherein one of the wall elements is a structured wall element (30, 31, 33) which comprises
- an inner surface (110), oriented towards one of the battery cells (50), for contacting the cooling fluid, and
- an outer surface (120) forming an exterior surface of the battery module,
**characterized in that** the inner surface is shaped to define a plurality of grooves (130) or a plurality of ridges (180) for increasing the contact surface between the structured wall element (30, 31, 33) and the cooling fluid, and for directing the flow of the cooling fluid in the cooling volume.

2. Battery module according to claim 1, wherein the battery cells (50) are stacked in a stack direction (60), and wherein the structured wall element is an end plate (30, 31, 33) delimiting the cooling volume in the stack direction.

3. Battery module according to any one of the preceding claims, wherein the structured wall element (30, 31, 33) comprises an inlet (90, 101) through which the cooling fluid can enter the cooling volume.

4. Battery module according to any one of the preceding claims, wherein the structured wall element (30, 31, 33) comprises an outlet (100, 91) through which the cooling fluid can exit the cooling volume.

5. Battery module according to any one of the preceding claims, wherein the grooves (130) or the ridges (180) are parallel to each other.

6. Battery module according to any one of the preceding claims, wherein the structured wall element (30, 31, 33) comprises an inlet (90, 101) through which the cooling fluid can enter the cooling volume, and an outlet (100, 91) through which the cooling fluid can exit the cooling volume,
and wherein the grooves (130) or ridges (180) extend between an inlet portion (140) of the structured wall element (30, 31, 33) comprising the inlet (90, 101), and an outlet portion (150) of the structured wall element (30, 31, 33) comprising the outlet (100, 91).

7. Battery module according to any one of the preceding claims, wherein the inner surface (110) is shaped to define a plurality of grooves (130),
the battery module further comprising a pressure plate (230, 231) for exerting pressure on one (50a, 50b) of the battery cells (50), wherein the pressure plate is arranged between the inner surface (110) of the structured wall element (30, 31, 33) and the one of the battery cells,
and wherein the pressure plate covers the grooves such as to form channels through which the cooling fluid can flow.

8. Battery module according to any one of the preceding claims, further comprising a flow-blocking element (200, 201), attached to the inner surface (110), and adapted to reduce, or to block completely, a flow of cooling fluid in a groove (130) or between two adjacent ridges (180).

9. Battery module according to claim 8, wherein the flow-blocking element (200, 201) is attached to the inner surface (110) removably.

10. Battery module according to claim 8 or claim 9, wherein the flow-blocking element (200, 201) is made from, or comprises, polypropylene, polyethylene, polyester, polyamide, polyimide, or polyvinylchloride.

11. Battery module according to claim 8, claim 9 or claim 10, wherein the flow-blocking element (200, 201) is shaped to form a plurality of teeth (220), each tooth (220) being shaped to correspond to a cross section of a groove (130) or to a cross section of a space between adjacent ridges (180), such that the tooth can block completely a flow of cooling fluid in the groove or between the two adjacent ridges.

12. Battery module according to any one of the preceding claims, wherein the cooling volume contains a cooling fluid which is liquid at 20°C and at 1013 hPa.

13. Battery module according to claim 12, wherein the cooling fluid is a dielectric cooling fluid having a having a volume resistivity of 10⁷ Ohm-cm or higher.

14. A battery system for an electrical or hybrid-electrical vehicle comprising a battery module (1) according to any one of the preceding claims.

15. An electrical or hybrid-electrical vehicle comprising a battery system according to claim 14.
